# EUROPEAN PATENT SPECIFICATION

(11) **EP 2 931 755 B1**
(45) Date of publication and mention of the grant of the patent: **15.06.2016**
(21) Application number: 14733553.3
(22) Date of filing: 10.06.2014
(51) Int. Cl.: C08F 2/34, C08F 10/02

(54) **POLYMERIZATION PROCESS IN THE PRESENCE OF AN ANTISTATICALLY ACTING COMPOSITION**
POLYMERISATIONSVERFAHREN IN GEGENWART EINER ANTISTATISCH WIRKENDEN ZUSAMMENSETZUNG
PROCÉDÉ DE POLYMÉRISATION EN PRÉSENCE D'UNE COMPOSITION AGISSANT DE FAÇON ANTISTATIQUE

(30) Priority: 11.06.2013 EP 13171408
(43) Date of publication of application: 21.10.2015
(73) Proprietor: Basell Polyolefine GmbH, 50389 Wesseling (DE)
(72) Inventor: MIHAN, Shahram, 65812 Bad Soden (DE); MEIER, Gerhardus, 60320 Frankfurt (DE); SCHUELLER, Ulf, 60486 Frankfurt/M (DE); SCHIENDORFER, Michael, 84453 Mühldorf am Inn (DE); WIESECKE, Jens, 64673 Zwingenberg (DE)
(74) Representative: Seelert, Stefan
(86) International application number: PCT/EP2014/061977
(87) International publication number: WO 2014/198693

(56) References cited:
- WO-A1-2011/072850
- BE-A- 645 961

## Description

### Field of the invention

The present invention relates to a process for the preparation of polyolefins by polymerizing olefins at temperatures of from 20 to 200°C and pressures of from 0.1 to 20 MPa in the presence of a polymerization catalyst and an antistatically acting composition in a polymerization reactor.

### Background of the invention

Antistatic agents are commonly used in the continuous polymerization of olefins to avoid electrostatic charging. In the context of olefin polymerization they are also called antifouling agents, activity inhibitors, productivity inhibitors or kinetic modifiers. Usually the antistatic agents comprise antistatically acting compounds which have polar functional groups such as acid or ester groups, amine or amide groups or hydroxyl or ether groups. Examples of antistatically acting compounds are polysulfone copolymers, polymeric polyamines, polyalcohols, hydroxyesters of polyalcohols, salts of alkylarylsulfonic acids, polysiloxanes, alkoxyamines, polyglycol ethers, etc.

Quite efficient as antistatic agents are compositions which comprise more than one antistatically acting compound. US 3,917,466 teaches antistatic additive compositions comprising a polysulfone copolymer, a polymeric polyamine, an oil-soluble sulfonic acid and a solvent. WO 2008/107371 A2 refers to similar compositions, however comprising specific organic solvents with a high boiling point. The use of such compositions as antistatic agents for the polymerization of olefins is, for example, described in US 5,026,795, WO 02/40554 A1, WO 2007/131646 or WO 2011/072850 A1. A disadvantage of using these antistatic agents in the continuous polymerization of olefins is that they not only have the desired antistatic effect but also negatively impact the activity of virtually all olefin polymerization catalysts. Furthermore, their efficiency is limited; that means even if these antistatic additive compositions are added to the polymerization, there are still sometimes issues regarding sheeting and lump formation because of electrostatic charging for certain products, especially for preparing polyolefins with relatively high molecular weight. A further draw-back of is that the most effective mixtures contain substances such as substituted benzenes or naphthalenes and very often not all ingredients of these mixtures are food-contact approved.

There have also been made attempts to utilize simple chemical compounds for avoiding or reducing electrostatic charges within the polymerization reactor. EP 0 315 192 A1, for example, teaches to add oxygen, nitric oxide, alcohols containing up to 7 carbon atoms or ketones containing up to 7 carbon atoms. EP 0 366 823 A1 discloses a method for reducing sheeting during polymerization of α-olefins by introducing water into a polymerization reactor in order to influence the electrostatic levels at the site of possible sheet formation. The water is added by bubbling nitrogen through a tank filled with water and the water saturated nitrogen is then introduced into the olefin feed line of the reactor. This method is however not suitable for nitrogen-free polymerization processes.

Thus, it was the object of the present invention to overcome the disadvantages of the prior art and to find a process for the polymerization of olefins in the presence of an antistatic agent which is simple to carry out, does not deteriorate the product properties of the prepared polyolefins, does not impair or even improve the activity of the catalyst, provides a good operability of the polymerization process especially with respect to the formation of fines, i.e. the formation of very small polyolefin particles, and furthermore does not require to add not food-contact approved substances to the polymerization.

### Summary of the invention

We have found that this object is achieved by a process for the preparation of polyolefins by polymerizing olefins at temperatures of from 20 to 200°C and pressures of from 0.1 to 20 MPa in the presence of a polymerization catalyst and an antistatically acting composition in a polymerization reactor, wherein the antistatically acting composition is a mixture comprising an oil-soluble surfactant and water and the polymerization is carried out using a Phillips catalyst based on chromium oxide, a titanium-based Ziegler- or Ziegler-Natta-catalyst, a single-site catalyst or a mixture of two or more of these catalysts.

Furthermore, we have found the use of an antistatically acting composition comprising an oil-soluble surfactant and water as antistatic agent for the polymerization of olefins at temperatures of from 20 to 200°C and pressures of from 0.1 to 20 MPa in the presence of a polymerization catalyst.

### Detailed description of the invention

The present invention provides a process for the polymerization of olefins and especially for the polymerization of 1-olefins, i.e. hydrocarbons having terminal double bonds, without being restricted thereto. Suitable monomers can be functionalized olefinically unsaturated compounds such as ester or amide derivatives of acrylic or methacrylic acid, for example acrylates, methacrylates, or acrylonitrile. Preference is given to nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process is in particular suitable in the homopolymerization or copolymerization of ethylene or propylene and is especially preferred for the homopolymerization or copolymerization of ethylene. Preferred comonomers in propylene polymerization are up to 40 wt.% of ethylene and/or 1-butene, preferably from 0.5 wt.-% to 35 wt.-% of ethylene and/or 1-butene. As comonomers in ethylene polymerization, preference is given to using up to 20 wt.-%, more preferably from 0.01 wt.-% to 15 wt.-% and especially from 0.05 wt.-% to 12 wt.-% of C₃-C₈-1-alkenes, in particular 1-butene, 1-pentene, 1-hexene and/or 1-octene. Particular preference is given to a process in which ethylene is copolymerized with from 0.1 wt.-% to 12 wt.-% of 1-hexene and/or 1-butene.

The process of the present invention is especially suitable for the preparation of polyethylenes having a MFR_{21.6} at a temperature of 190°C under a load of 21.6 kg, determined according to DIN EN ISO 1133:2005, condition G, of from 0.5 to 300 g/10 min, more preferably of from 1 to 100 g/10 min, even more preferably of from 1.2 to 60 g/10 min and especially of from 1.5 to 35 g/10 min.

The process can be carried out using all industrially known low-pressure polymerization methods at temperatures in the range from 20 to 200°C, preferably from 30 to 150°C and particularly preferably from 40 to 130°C, and under pressures of from 0.1 to 20 MPa and particularly preferably from 0.3 to 5 MPa. The polymerization can be carried out batchwise or preferably continuously in one or more stages. Solution processes, suspension processes, stirred gas-phase processes and gas-phase fluidized-bed processes are all possible. Processes of this type are generally known to those skilled in the art. Among the polymerization processes mentioned, gas-phase polymerization, in particular in gas-phase fluidized-bed reactors and suspension polymerization, in particular in loop reactors or stirred tank reactors, are preferred.

In a preferred embodiment of the present invention, the polymerization process is a suspension polymerization in a suspension medium, preferably in an inert hydrocarbon such as isobutane or mixtures of hydrocarbons or else in the monomers themselves. Suspension polymerization temperatures are usually in the range from 20 to 115°C, and the pressure is in the range of from 0.1 to 10 MPa. The solids content of the suspension is generally in the range of from 10 to 80 wt.-%. The polymerization can be carried out both batchwise, e.g. in stirred autoclaves, and continuously, e.g. in tubular reactors, preferably in loop reactors. In particular, it can be carried out by the Phillips PF process as described in US 3,242,150 and US 3,248,179.

Suitable suspension media are all media which are generally known for use in suspension reactors. The suspension medium should be inert and be liquid or supercritical under the reaction conditions and should have a boiling point which is significantly different from those of the monomers and comonomers used in order to make it possible for these starting materials to be recovered from the product mixture by distillation. Customary suspension media are saturated hydrocarbons having from 4 to 12 carbon atoms, for example isobutane, butane, propane, isopentane, pentane and hexane, or a mixture of these, which is also known as diesel oil.

In a preferred suspension polymerization process, the polymerization takes place in a cascade of two or preferably three or four stirred vessels. The molecular weight of the polymer fraction prepared in each of the reactors is preferably set by addition of hydrogen to the reaction mixture. The polymerization process is preferably carried out with the highest hydrogen concentration and the lowest comonomer concentration, based on the amount of monomer, being set in the first reactor. In the subsequent further reactors, the hydrogen concentration is gradually reduced and the comonomer concentration is altered, in each case once again based on the amount of monomer. Ethylene or propylene is preferably used as monomer and a 1-olefin having from 4 to 10 carbon atoms is preferably used as comonomer.

A further preferred suspension polymerization process is suspension polymerization in loop reactors, where the polymerization mixture is pumped continuously through a cyclic reactor tube. As a result of the pumped circulation, continual mixing of the reaction mixture is achieved and the catalyst introduced and the monomers fed in are distributed in the reaction mixture. Furthermore, the pumped circulation prevents sedimentation of the suspended polymer. The removal of the heat of reaction via the reactor wall is also promoted by the pumped circulation. In general, these reactors consist essentially of a cyclic reactor tube having one or more ascending legs and one or more descending legs which are enclosed by cooling jackets for removal of the heat of reaction and also horizontal tube sections which connect the vertical legs. The impeller pump, the catalyst feed facilities and the monomer feed facilities and also the discharge facility, thus normally the settling legs, are usually installed in the lower tube section. However, the reactor can also have more than two vertical tube sections, so that a meandering arrangement is obtained.

Preferably, the suspension polymerization is carried out in the loop reactor at an ethylene concentration of at least 5 mole percent, preferably 10 mole percent, based on the suspension medium. In this context, suspension medium does not mean the fed suspension medium such as isobutane alone but rather the mixture of this fed suspension medium with the monomers dissolved therein. The ethylene concentration can easily be determined by gas-chromatographic analysis of the suspension medium.

In a further preferred embodiment of the present invention, the polymerization process is carried out in a horizontally or vertically stirred or fluidized gas-phase reactor.

Particular preference is given to gas-phase polymerization in a fluidized-bed reactor, in which the circulated reactor gas is fed in at the lower end of a reactor and is taken off again at its upper end.

When such a process is employed for the polymerization of 1-olefins, the circulated reactor gas is usually a mixture of the 1-olefins to be polymerized, inert gases such as nitrogen and/or lower alkanes such as ethane, propane, butane, pentane or hexane and optionally a molecular weight regulator such as hydrogen. The use of nitrogen or propane as inert gas, if appropriate in combination with further lower alkanes, is preferred. The velocity of the reactor gas has to be sufficiently high firstly to fluidize the mixed bed of finely divided polymer present in the tube and serving as polymerization zone and secondly to remove the heat of polymerization effectively. The polymerization can also be carried out in a condensed or super-condensed mode, in which part of the circulating gas is cooled to below the dew point and returned to the reactor separately as a liquid and a gas phase or together as a two-phase mixture in order to make additional use of the enthalpy of vaporization for cooling the reaction gas.

In gas-phase fluidized-bed reactors, it is advisable to work at pressures of from 0.1 to 10 MPa, preferably from 0.5 to 8 MPa and in particular from 1.0 to 3 MPa. In addition, the cooling capacity depends on the temperature at which the polymerization in the fluidized bed is carried out. The process is advantageously carried out at temperatures of from 30 to 160°C, particularly preferably from 65 to 125°C, with temperatures in the upper part of this range being preferred for copolymers of relatively high density and temperatures in the lower part of this range being preferred for copolymers of lower density.

Preferred reactors are further multizone circulating reactors which are, for example, described in WO 97/04015 and WO 00/02929 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, preferably below the barrier feeding point. Thus, it is also easily possible to create varying monomer, comonomer and hydrogen concentrations along the downcomer resulting in a further differentiation of the polymerization conditions.

The gas-phase polymerization processes according to the present invention are preferably carried out in the presence of a C₃-C₅ alkane as polymerization diluent and more preferably in the presence of propane, especially in the case of homopolymerization or copolymerization of ethylene.

The different or else identical polymerization processes can also, if desired, be connected in series and thus form a polymerization cascade. A parallel arrangement of reactors using two or more different or identical processes is also possible. However, the polymerization is preferably carried out in a single reactor.

The polymerization of olefins can be carried out using all customary olefin polymerization catalysts of the types of Phillips catalysts based on chromium oxide, of titanium-based Ziegler- or Ziegler-Natta-catalysts, or of single-site catalysts. For the purposes of the present invention, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts for the process of the present invention are catalysts of the Phillips type, which are preferably prepared by applying a chromium compound to an inorganic support and subsequently calcinating this at temperatures in the range from 350 to 950°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during calcination. As supports for Phillips catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250 to 500°C, preferably at 300 to 400°C, in an activator.

Preferred catalysts for the process of the present invention are also single-site catalysts. Particularly suitable are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Further preferred catalysts are mixtures of two or more single-site catalysts or mixtures of different types of catalysts comprising at least one single-site catalyst.

Suitable catalysts are further catalysts of the Ziegler type, preferably comprising a compound of titanium or vanadium, a compound of magnesium and optionally an electron donor compound and/or a particulate inorganic oxide as support. Such Ziegler type catalysts are usually polymerized in the presence of a cocatalyst. Preferred cocatalysts are organometallic compounds of metals of groups 1, 2, 12, 13 or 14 of the Periodic Table of Elements, in particular organometallic compounds of metals of group 13 and especially organoaluminum compounds. Preferred cocatalysts are for example organometallic alkyls, organometallic alkoxides, or organometallic halides.

The obtained polyolefin particles have a more or less regular morphology and size, depending on the catalyst morphology and size, and on polymerization conditions. Depending on the catalyst used, the polyolefin particles usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 500 to about 3000 µm.

The antistatically acting composition of the present invention is a mixture comprising an oil-soluble surfactant and water. The oil-soluble surfactant is preferably an ionic oil-soluble surfactant and is more preferably a strong organic acid comprising a hydrocarbyl group of from 6 to 40 carbon atoms.

Preferred organic acids comprised in the antistatically acting mixture are characterized by comprising a hydrocarbyl group of from 6 to 40 carbon atoms, preferably from 8 to 32 carbon atoms and more preferably having from 10 to 24 carbon atoms and by being a strong acid. Accordingly, the pKa of the organic acids is preferably equal to or less than +4, more preferably equal to or less than +3, and especially preferred equal to or less than +2. Suitable classes of organic acids are organic sulfonic acids, organic sulfinic acids or organic phosphonic acids. Preferably the organic acid is a sulfonic acid. Due to the relatively long-chain or relatively voluminous alkyl group, such organic acids have a good solubility in hydrocarbons like oil.

Suitable hydrocarbyl groups are linear or branched alkyl or alkenyl radicals, e.g. n-hexyl, n-heptyl, n-octyl, 2-ethylhexyl, n-nonyl, n-decyl, 2-propylheptyl, n-undecyl, n-dodecyl, n-tridecyl, isotridecyl, n-tetradecyl, n-pentadecyl, n-hexadecyl, n-heptadecyl, n-octadecyl, n-nonadecyl, n-eicosyl, n-heneicosyl, n-docosyl, n-tricosyl, n-tetracosyl, oleyl, linolyl or linolenyl, cycloalkyl radicals, e.g. cyclohexyl, methyl-cyclohexyl or dimethylcyclohexyl, aryl radicals, e.g. phenyl or naphthyl, aralkyl radicals, e.g. benzyl or 2-phenylethyl, or more preferably alkaryl radicals, especially phenyl or naphthyl substituted by linear or branched C₁ - to C₁₈-alkyl groups, e.g. tolyl, xylyl, n-nonylphenyl, n-decylphenyl, n-dodecylphenyl, isotridecylphenyl, n-nonylnaphthyl, di-n-nonylnaphthyl, n-decylnaphthyl, di-n-decylnaphthyl, n-dodecylnaphthyl, di-n-dodecylnaphthyl, isotridecylnaphthyl or diisotridecylnaphthyl. In the latter monosubstituted phenyl radicals, the alkyl groups may be in the ortho, meta or para position to the sulfonic acid group, preference being given to para orientation. Typical examples of the organic acids are therefore n-nonylbenzenesulfonic acid, n-decyl-benzenesulfonic acid, n-dodecylbenzenesulfonic acid, isotridecylbenzenesulfonic acid, n-nonylnaphthylsulfonic acid, di-n-nonylnaphthylsulfonic acid, n-decylnaphthylsulfonic acid, di-n-decylnaphthylsulfonic acid, n-dodecylnaphthylsulfonic acid, di-n-dodecyl-naphthylsulfonic acid, isotridecylnaphthylsulfonic acid and diisotridecylnaphthylsulfonic acid. Especially preferred representatives of the organic acids of the present invention are dinonylnaphthylsulfonic acids and dodecylbenzenesulfonic acids.

Commercial dodecylbenzenesulfonic acids are usually a mixture of different isomers, preferably comprising mainly unbranched alkyl chains. Furthermore, is also possible that commercial dodecylbenzenesulfonic acids contain alkylbenzenesulfonic acid compounds that feature alkyl chain lengths different from C₁₂. In such a case the alkyl chain lengths aside from C₁₂ mainly ranges from C₁₀ to C₁₆ but the mean number of alkyl carbon atoms in the alkylbenzenesulfonic acids is 12.

The antistatically acting composition of the present invention can be introduced into the reactor with the aid of all customary methods. It possible to introduce the components of the composition into the reactor as separated feeds or first mixtures of some or all of the components may be prepared and then the mixture or the mixtures are introduced into the reactor. The feeding can occur directly into the reactor or into a line leading to the reactor. The antistatically acting composition or its components can be introduced into the reactor together with other charged materials; however it is also possible to introduce the antistatically acting composition or its components separately.

In a preferred embodiment of the invention, the amount of oil-soluble surfactant introduced into the polymerization reactor is from 0.025 to 50 ppm per weight, more preferably from 1 to 30 ppm per weight, and most preferably from 1 to 20 ppm per weight referring to the weight of the prepared polyolefin and the amount of water introduced into the polymerization reactor is from 0.005 to 0.5 ppm per weight, more preferably from 0.01 to 0.4 ppm per weight, and most preferably from 0.05 to 0.35 ppm per weight, referring to the weight of the prepared polyolefin.

Preferable the antistatically acting composition comprises an alcohol beside the oil-soluble surfactant and water. Preferred alcohols are linear or branched C₁-C₁₂ alcohols, which can be mono alcohols, diols or triols. More preferably such alcohols are mono alcohols having from 1 to 4 carbon atoms. Representatives of suitable alcohols are ethylene glycol, glycerol, methanol, ethanol, n-propanol, isopropanol, n-butanol, sec-butanol, isobutanol, or tert-butanol. Most preferably the alcohol is methanol, ethanol or isopropanol. Preferably the amount of alcohol introduced into the polymerization reactor is from 0.05 ppm to 5 ppm per weight, more preferably from 0.1 to 3 ppm per weight, and most preferably from 0.5 to 2 ppm per weight, referring to the weight of the prepared polyolefin.

In a preferred embodiment of the present invention, first a mixture of the oil-soluble surfactant, the water, if added, the alcohol, and one or more aliphatic hydrocarbons is prepared and said mixture is then introduced into the polymerization reactor. Suitable aliphatic hydrocarbons for preparing such mixtures are linear, branched or alicyclic hydrocarbons of from 3 to 40 carbon atoms. Preferred aliphatic hydrocarbons are hydrocarbons having from 5 to 12 carbon atoms or white mineral oils having from 15 to 40 carbon atoms. Hydrocarbons having from 5 to 12 carbon atoms are especially preferred. Most preferred aliphatic hydrocarbons are pentane, hexane or heptane.

The preparation of the mixture can be carried out according to all suitable methods, for example by stirring or shaking. The preparation is preferably carried out at temperatures at which the hydrocarbon is in liquid state. Most preferably the mixtures are prepared at temperatures from 20°C to 50°C since gentle heating facilitates homogenization of the mixtures. The prepared mixtures are preferable homogeneous mixtures which do not separate over time. The mixtures preferably comprise at least 30 wt.-% of aliphatic hydrocarbon and more preferably at least 40 wt.-% of aliphatic hydrocarbon. Preferred mixtures comprise from 10 to 69.9 wt.-% of oil-soluble surfactant, from 0.1 to 2 wt.-% of water, from 0 to 15 wt.-% of alcohol and from 30 to 89.9 wt.-% of aliphatic hydrocarbon. Especially preferred mixtures comprise from 20 to 50 wt.-% of oil-soluble surfactant, from 0.2 to 1 wt.-% of water, from 2 to 10 wt.-% of alcohol and from 40 to 77.8 wt.-% of aliphatic hydrocarbon.

Depending on the kind of the polymerization and the dimension of available means for feeding, such a prepared mixture of the components of the antistatically acting composition and a hydrocarbon can be fed to the reactor as such or in further diluted form, preferably further diluted by an aliphatic hydrocarbon. Preferred hydrocarbons for diluting such a prepared mixture are propane, isobutane, n-hexane, isohexane, EXXOL^{®} grades obtainable from ExxonMobil Chemical or white mineral oils. It is especially preferred to dilute such a prepared mixture of the components of the antistatically acting composition and a hydrocarbon with a hydrocarbon, which used as diluent or suspension medium in the polymerization process.

The antistatically acting composition of the present invention is especially useful for the polymerization of olefins at temperatures of from 20 to 200°C and pressures of from 0.1 to 20 MPa in the presence of a polymerization catalyst.

Using the antistatically acting composition of the present invention does not only result in a process for the polymerization of olefins in the presence of an antistatic agent which is simple to carry out but also the polymerization process has a good operability. That means, as well the tendency for forming polymer deposits on the rector wall, i.e. reactor fouling, and for forming lumps as the tendency for forming fines, i.e. for forming very small polyolefin particles, is reduced. Moreover; the activity of the catalyst is improved or at least not impaired and the product properties of the prepared polyolefins are not deteriorated. Furthermore, using the antistatically acting composition of the present invention does not require adding not food-contact approved substances to the polymerization.

The invention is illustrated below with the aid of examples, without being restricted thereto.

### Examples

The electrostatic charges present in the fluidized-bed reactor were measured by a sensor (Correstat 3410; Progression, Inc., Haverhill, MA, USA), which monitors charge activity and polarity within the reactor. It has a measurement range from +/- 0 to 0.1 nA full scale. For the evaluation of the electrostatic charges inside the reactor, the difference between measured negative and positive charges was chosen. The maximum difference is 0.2 nA and is defined as 100 % scale whereas no variation in the electrostatic charge is referred to as 0 % scale.

The determination of the particle size distribution of the produced polyethylene powder was carried out by dry sieving analysis according to DIN 53477 (November 1992) with a set of 5 calibrated sieves (125 µm, 250 µm, 500 µm, 1000 µm, and 2000 µm).

Density was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

The melt flow rate MFR_{21.6} was determined according to DIN EN ISO 1133:2005, condition G at a temperature of 190°C under a load of 21.6 kg.

Environmental stress cracking resistance was determined as FNCT (full-notch creep test) according to ISO 16770:2004 at 80°C under tensile stress of 3.5 MPa. Test specimen B was produced from the pellets via pressing of a corresponding sheet.

Impact strength was determined as tensile impact strength according to ISO 8256 (1997) /1A at -30°C. The test specimens were produced from pellets by pressing.

### Example 1

### Preparation of Catalyst I

A support was prepared as in Example 1, paragraph 1.1 of EP 0 535 516 A1.

The support thus obtained was then, in accordance with the specification in Example 1, paragraph 1.2 of EP 0 535 516 A1, treated with a solution of 4.1 wt.-% of chromium-(III) nitrate 9-hydrate. The chromium-doped support was then calcined, under conditions in other respects identical with those in Example 1, paragraph 1.2 of EP 0 535 516 A1, at 560°C.

This gave a chromium catalyst whose chromium content was 1.0 wt.-%, whose pore volume was 1.1 ml/g, and whose specific surface area was 350 m2/g.

### Example 2

### Preparation of Catalyst II

The support used was a granular SiO₂ support having a surface area (BET) of 320 m²/g and a pore volume of 1.75 mL/g. Such a support is available commercially from, for example, Grace under the trade name Sylopol 332.

To 100 kg of the support there were added 141 L of a solution of Cr(NO₃)₃9H₂O in methanol (11.3 g/L), and after 1 hour the solvent was removed by distillation under reduced pressure. The resulting intermediate contained 0.2% wt.-% of chromium.

The said intermediate product was calcined in a vapor-phase fluidized bed. The mixture was first of all heated to 300°C with fluidization thereof by pure nitrogen, which was subsequently replaced by air, whereupon the mixture was heated until the desired end temperature of 680°C had been reached. The mixture was kept at the end temperature over a period of 10 hours, after which the gas was switched back to nitrogen and the mixture cooled.

### Example 3

### Preparation of the antistatically action composition

1800 g of dodecylbenzenesulfonic acid (CAS.-No. 27176-87-0; obtained from abcr GmbH & Co. KG, Karlsruhe, Germany) were added to 3807 g of n-heptane and stirred. Then 360 g of isopropanol and 33 g of water were added. The mixture was shaken (not stirred) until a clear homogeneous stable formulation was obtained. The water content was measured by a 831 KF Coulometer (Deutsche METROHM GmbH & Co. KG, Filderstadt, Germany) to be 6200 ppm (+/-200 ppm).

Consequently the mixture had a composition of 0.6 wt.-% of water, 6 wt.-% of isopropanol, 30 wt.-% of dodecylbenzenesulfonic acid and 63.4 wt.-% of n-heptane.

### Example 4

A high-density polyethylene was prepared using catalyst I obtained in Example 1. The polymerization was carried out in a stainless steel fluidized bed reactor having an internal diameter of 500 mm equipped with a gas circulation system, cyclone, heat exchanger, control systems for temperature and pressure and feeding lines for ethylene, 1-hexene, nitrogen and hexane. The reactor pressure was controlled to be 2.1 MPa. The catalyst was injected in a discontinuous way by means of dosing valve with nitrogen. In addition, trihexylaluminum (THA; obtained from Chemtura Organometallics GmbH, Bergkamen, Germany) was added to the reactor in an amount of 15 ppm per weight referring to the weight of the prepared polyolefin. The reactor throughput was kept at 50 kg/h.

The mixture prepared in Example 3 was added to the reactor as antistatic agent in an amount of 6 ppm per weight referring to the weight of the prepared polyolefin. The dosing of the mixture prepared in Example 3 occurred in further diluted form as solution in n-hexane.

The reaction conditions in the polymerization reactor and the properties of the obtained polyethylene are reported in Table 1.

### Comparative Example A

Example 3 was repeated however using as antistatic agent Statsafe 3000, which is commercially available from Innospec Limited, Cheshire, United Kingdom. The added amount was 6 ppm per weight referring to the weight of the prepared polyolefin. The dosing occurred in further diluted form as solution in n-hexane. Trihexylaluminum was fed to the reactor in an amount of 17 ppm per weight.

The reaction conditions in the polymerization reactor and the properties of the obtained polyethylene are reported in Table 1.

### Example 5

A high-density polyethylene similar to the polyethylene obtained in Example 4 was prepared as in Example 3, however using catalyst II obtained in Example 2 which is more sensitive with respect to operability. The reactor throughput was kept at 50 kg/h.

The mixture prepared in Example 3 was added to the reactor as antistatic agent in an amount of 10 ppm per weight referring to the weight of the prepared polyolefin. The dosing of the mixture prepared in Example 3 occurred in further diluted form as solution in n-hexane. Trihexylaluminum was added in an amount of 18 ppm per weight.

The reaction conditions in the polymerization reactor and the properties of the obtained polyethylene are reported in Table 1.

### Comparative Example B

Example 4 was repeated however using as antistatic agent Statsafe 3000. The added amount was 7 ppm per weight referring to the weight of the prepared polyolefin. The dosing occurred in further diluted form as solution in n-hexane. Trihexylaluminum was fed to the reactor in an amount of 18 ppm per weight.

The reaction conditions in the polymerization reactor and the properties of the obtained polyethylene are reported in Table 1.

**Table 1**

| | Example 4 | Comparative Example A | Example 5 | Comparative Example B |
|---|---|---|---|---|
| Reactor temperature [°C] | 115.2 | 114.5 | 113.6 | 113.5 |
| Ethylene [% by vol.] | 54.8 | 55.2 | 54.6 | 52.6 |
| n-Hexane [% by vol.] | 4.0 | 4.0 | 4.0 | 4.0 |
| 1-Hexene [% by vol.] | 0.09 | 0.10 | 0.13 | 0.11 |
| Nitrogen [% by vol.] | 41.1 | 40.7 | 41.3 | 43.3 |
| Electrostatics [%] | 10 | 37 | 62 | 93 |
| PE particles <125 µm [wt.-%] | 0.4 | 0.9 | 0.7 | 2.2 |
| PE particles <250 µm [wt.-%] | 2.6 | 5.0 | 8.9 | 11.2 |
| Productivity [g of PE/g of solid catalyst] | 8540 | 6180 | 10840 | 6610 |
| Density [g/cm³] | 0.9451 | 0.9467 | 0.9451 | 0.9466 |
| MFR_{21.6} [g/10 min] | 5.5 | 5.6 | 4.7 | 6.0 |
| FNCT [h] | 52.6 | 46.8 | 34.9 | 31.8 |
| Tensile impact strength aₜₙ [kJ/m²] | 150 | 159 | 160 | 148 |

The comparison of Examples 5 and 5 with Comparative Examples A and B shows that by employing an antistatically acting composition according to the present invention the electrostatic charges present in the fluidized-bed reactor are significantly lower than by using a commercially available antistatic agent and the amount of fines, i.e. the amount of very small polyolefin particles, is surprisingly reduced. On the other hand, the productivity of the catalyst is significantly increased. Moreover, the polymer properties of the obtained polyethylenes remain essentially constant.

## Claims

1. A process for the preparation of polyolefins by polymerizing olefins at temperatures of from 20 to 200°C and pressures of from 0.1 to 20 MPa in the presence of a polymerization catalyst and an antistatically acting composition in a polymerization reactor, wherein the antistatically acting composition is a mixture comprising an oil-soluble surfactant and water and the polymerization is carried out using a Phillips catalyst based on chromium oxide, a titanium-based Ziegler- or Ziegler-Natta-catalyst, a single-site catalyst or a mixture of two or more of these catalysts.

2. A process for the polymerization of olefins according to claim 1, wherein the oil-soluble surfactant is a strong organic acid of a pKₐ of equal to or less than +4 comprising a hydrocarbyl group of from 6 to 40 carbon atoms.

3. A process for the polymerization of olefins according to claim 1 or 2, wherein the oil-soluble surfactant is a dodecylbenzenesulfonic acid.

4. A process for the polymerization of olefins according to any of claims 1 to 3, wherein the polymerization is carried out continuously and the amount of oil-soluble surfactant introduced into the polymerization reactor is from 0.025 to 50 ppm per weight referring to the weight of the prepared polyolefin and the amount of water introduced into the polymerization reactor is from 0.005 to 0.5 ppm per weight referring to the weight of the prepared polyolefin.

5. A process for the polymerization of olefins according to any of claims 1 to 4, wherein the polymerization is carried out continuously and the antistatically acting composition is a mixture additionally comprising an alcohol in an amount of from 0.05 ppm to 5 ppm per weight referring to the weight of the prepared polyolefin.

6. A process for the polymerization of olefins according to any of claims 1 to 5 wherein first a mixture of the oil-soluble surfactant, the water, if added the alcohol, and one or more aliphatic hydrocarbons is prepared and said mixture is then introduced into the polymerization reactor.

7. A process for the polymerization of olefins according to claim 5 or 6, wherein the alcohol is methanol, ethanol or isopropanol.

8. A process for the polymerization of olefins according to any of claims 1 to 7, wherein the polymerization is carried out in gas-phase in a fluidized bed reactor.

9. A process for the polymerization of olefins according to any of claims 1 to 7, wherein the polymerization is carried out in suspension in a loop reactor or in a stirred tank reactor.

10. A process for the polymerization of olefins according to any of claims 1 to 9, wherein the polymerization catalyst is a Phillips catalyst, a single-site catalyst or a mixture of catalysts comprising at least one single-site catalyst.

11. A process for the polymerization of olefins according to any of claims 1 to 10, wherein the process is applied for preparing a polyethylene having a MFR_{21.6} at a temperature of 190°C under a load of 21.6 kg of from 0.5 to 300 g/10 min.

12. Use of an antistatically acting composition comprising an oil-soluble surfactant and water as antistatic agent for the polymerization of olefins at temperatures of from 20 to 200°C and pressures of from 0.1 to 20 MPa in the presence of a Phillips catalyst based on chromium oxide, a titanium-based Ziegler- or Ziegler-Natta-catalyst, a single-site catalyst or a mixture of two or more of these catalysts.

## Patentansprüche

1. Verfahren zur Herstellung von Polyolefinen durch Polymerisieren von Olefinen bei Temperaturen von 20 °C bis 200 °C und Drücken von 0,1 MPa bis 20 MPa in Gegenwart eines Polymerisationskatalysators und einer antistatisch wirkenden Zusammensetzung in einem Polymerisationsreaktor, wobei die antistatisch wirkende Zusammensetzung ein Gemisch ist, das ein öllösliches Tensid und Wasser enthält, und die Polymerisation mit einem auf Chromoxid basierenden Phillips-Katalysator, einem auf Titan basierenden Ziegler- oder Ziegler-Natta-Katalysator, einem Single-Site-Katalysator oder einem Gemisch aus zwei oder mehr dieser Katalysatoren durchgeführt wird.

2. Verfahren zur Polymerisation von Olefinen nach Anspruch 1, wobei das öllösliche Tensid eine starke organische Säure mit einem pKₐ von gleich oder weniger als +4 ist, die eine Hydrocarbylgruppe aus 6 bis 40 Kohlenstoffatomen enthält.

3. Verfahren zur Polymerisation von Olefinen nach Anspruch 1 oder 2, wobei das öllösliche Tensid eine Dodecylbenzolsulfonsäure ist.

4. Verfahren zur Polymerisation von Olefinen nach einem der Ansprüche 1 bis 3, wobei die Polymerisation kontinuierlich durchgeführt wird und die Menge des in den Polymerisationsreaktor eingetragenen öllöslichen Tensids von 0,025 Gew.-ppm bis 50 Gew.-ppm bezogen auf das Gewicht des hergestellten Polyolefins beträgt und die Menge des in den Polymerisationsreaktor eingetragenen Wassers von 0,005 Gew.-ppm bis 0,5 Gew.-ppm bezogen auf das Gewicht des hergestellten Polyolefins beträgt.

5. Verfahren zur Polymerisation von Olefinen nach einem der Ansprüche 1 bis 4, wobei die Polymerisation kontinuierlich durchgeführt wird und die antistatisch wirkende Zusammensetzung ein Gemisch ist, das zusätzlich einen Alkohol in einer Menge von 0,05 Gew.-ppm bis 5 Gew.-ppm bezogen auf das Gewicht des hergestellten Polyolefins enthält.

6. Verfahren zur Polymerisation von Olefinen nach einem der Ansprüche 1 bis 5, wobei zuerst ein Gemisch aus dem öllöslichen Tensid, dem Wasser, wenn zugefügt, dem Alkohol und einem oder mehr aliphatischen Kohlenwasserstoff(en) hergestellt wird und das Gemisch dann in den Polymerisationsreaktor eingetragen wird.

7. Verfahren zur Polymerisation von Olefinen nach Anspruch 5 oder 6, wobei der Alkohol Methanol, Ethanol oder Isopropanol ist.

8. Verfahren zur Polymerisation von Olefinen nach einem der Ansprüche 1 bis 7, wobei die Polymerisation in der Gasphase in einem Wirbelbettreaktor durchgeführt wird.

9. Verfahren zur Polymerisation von Olefinen nach einem der Ansprüche 1 bis 7, wobei die Polymerisation in Suspension in einem Schlaufenreaktor oder in einem Rührkesselreaktor durchgeführt wird.

10. Verfahren zur Polymerisation von Olefinen nach einem der Ansprüche 1 bis 9, wobei der Polymerisationskatalysator ein Phillips-Katalysator, ein Single-Site-Katalysator oder ein mindestens einen Single-Site-Katalysator enthaltendes Katalysatorgemisch ist.

11. Verfahren zur Polymerisation von Olefinen nach einem der Ansprüche 1 bis 10, wobei das Verfahren zur Herstellung eines Polyethylens mit einem MFR_{21,6} bei einer Temperatur von 190 °C unter einer Last von 21,6 kg von 0,5 bis 300 g/10 min angewendet wird.

12. Verwendung einer antistatisch wirkenden Zusammensetzung, die ein öllösliches Tensid und Wasser enthält, als antistatisches Mittel zur Polymerisation von Olefinen bei Temperaturen von 20 °C bis 200 °C und Drücken von 0,1 MPa bis 20 MPa in Gegenwart eines auf Chromoxid basierenden Phillips-Katalysators, eines auf Titan basierenden Ziegler- oder Ziegler-Natta-Katalysators, eines Single-Site-Katalysators oder eines Gemischs aus zwei oder mehr dieser Katalysatoren enthält.

## Revendications

1. Procédé pour la préparation de polyoléfines par polymérisation d'oléfines à des températures de 20 à 200°C et à des pressions de 0,1 à 20 MPa en présence d'un catalyseur de polymérisation et d'une composition agissant de manière antistatique dans un réacteur de polymérisation, la composition agissant de manière antistatique étant un mélange comprenant un tensioactif soluble dans l'huile et de l'eau et la polymérisation étant effectuée à l'aide d'un catalyseur de Phillips à base d'oxyde de chrome, un catalyseur de Ziegler ou de Ziegler-Natta à base de titane, un catalyseur à site unique ou un mélange de deux de ces catalyseurs ou plus.

2. Procédé pour la polymérisation d'oléfines selon la revendication 1, le tensioactif soluble dans l'huile étant un acide organique fort présentant un pKₐ égal ou inférieur à +4, comprenant un groupe hydrocarbyle comprenant 6 a 40 atomes de carbone.

3. Procédé pour la polymérisation d'oléfines selon la revendication 1 ou 2, le tensioactif soluble dans l'huile étant de l'acide dodécylbenzènesulfonique.

4. Procédé pour la polymérisation d'oléfines selon l'une quelconque des revendications 1 à 3, la polymérisation étant effectuée en continu et la quantité de tensioactif soluble dans l'huile introduite dans le réacteur de polymérisation étant de 0,025 à 50 ppm en poids, par rapport au poids de l'oléfine préparée, et la quantité d'eau introduite dans le réacteur de polymérisation étant de 0,005 à 0,5 ppm en poids, par rapport au poids de la polyoléfine préparée.

5. Procédé pour la polymérisation d'oléfines selon l'une quelconque des revendications 1 à 4, la polymérisation étant effectuée en continu et la composition agissant de manière antistatique étant un mélange comprenant en outre un alcool en une quantité de 0,05 ppm à 5 ppm en poids, par rapport au poids de la polyoléfine préparée.

6. Procédé pour la polymérisation d'oléfines selon l'une quelconque des revendications 1 à 5, un mélange du tensioactif soluble dans l'huile, de l'eau, de l'alcool, s'il est ajouté, et d'un ou de plusieurs hydrocarbures aliphatiques étant d'abord préparé et ledit mélange étant ensuite introduit dans le réacteur de polymérisation.

7. Procédé pour la polymérisation d'oléfines selon la revendication 5 ou 6, l'alcool étant le méthanol, l'éthanol ou l'isopropanol.

8. Procédé pour la polymérisation d'oléfines selon l'une quelconque des revendications 1 à 7, la polymérisation étant effectuée en phase gazeuse dans un réacteur à lit fluidisé.

9. Procédé pour la polymérisation d'oléfines selon l'une quelconque des revendications 1 à 7, la polymérisation étant effectuée en suspension dans un réacteur à boucle ou dans un réacteur à cuve agitée.

10. Procédé pour la polymérisation d'oléfines selon l'une quelconque des revendications 1 à 9, le catalyseur de polymérisation étant un catalyseur de Phillips, un catalyseur à site unique ou un mélange de catalyseurs comprenant au moins un catalyseur à site unique.

11. Procédé pour la polymérisation d'oléfines selon l'une quelconque des revendications 1 à 10, le procédé étant mis en oeuvre pour la préparation d'un polyéthylène présentant un indice de fluidité à chaud MFR_{21,6}, à une température de 190°C sous une charge de 21,6 kg, de 0,5 à 300 g/10 min.

12. Utilisation d'une composition agissant de manière antistatique, comprenant un tensioactif soluble dans l'huile et de l'eau, comme agent antistatique pour la polymérisation d'oléfines à des températures de 20 à 200°C et à des pressions de 0,1 à 20 MPa en présence d'un catalyseur de Phillips à base d'oxyde de chrome, d'un catalyseur de Ziegler ou de Ziegler-Natta à base de titane, d'un catalyseur à site unique ou d'un mélange de deux de ces catalyseurs ou plus.
